(19) Europäisches Patentamt
European Patent Office
Office européen des brevets

(11) **EP 3 196 603 B1**

(12) **EUROPÄISCHE PATENTSCHRIFT**

(45) Veröffentlichungstag und Bekanntmachung des Hinweises auf die Patenterteilung:
**12.08.2020   Patentblatt 2020/33**

(51) Int Cl.:
*G01F 1/84* *(2006.01)*    *G01F 25/00* *(2006.01)*

(21) Anmeldenummer: **16203405.2**

(22) Anmeldetag: **12.12.2016**

(54) **VERFAHREN ZUM BETREIBEN EINES CORIOLIS-MASSEDURCHFLUSSMESSGERÄTS UND DIESBEZÜGLICHES CORIOLIS-MASSEDURCHFLUSSMESSGERÄT**

METHOD FOR OPERATING A CORIOLIS MASS FLOW METER AND RELATED CORIOLIS MASS FLOW METER

PROCÉDÉ DE FONCTIONNEMENT D'UN DÉBITMÈTRE MASSIQUE À ACCÉLÉRATION DE CORIOLIS ET DÉBITMÈTRE MASSIQUE À ACCÉLÉRATION DE CORIOLIS CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2016   DE 102016100950**

(43) Veröffentlichungstag der Anmeldung:
**26.07.2017   Patentblatt 2017/30**

(73) Patentinhaber: **Krohne Messtechnik GmbH 47058 Duisburg (DE)**

(72) Erfinder:
• **Kolahi, Kourosh 47051 Duisburg (DE)**
• **Storm, Ralf 45131 Essen (DE)**

(74) Vertreter: **Gesthuysen Patent- und Rechtsanwälte Patentanwälte Huyssenallee 100 45128 Essen (DE)**

(56) Entgegenhaltungen:
**DE-A1-102011 080 415      DE-A1-102014 103 427 GB-A- 2 140 923      US-A- 5 753 827**

• **R.K. CHOHAN ET AL: "Mathematical modelling of industrial thermometers", TRANSACTIONS OF THE INSTITUTE OF MEASUREMENT AND CONTROL., Bd. 7, Nr. 3, 1. Juni 1985 (1985-06-01), Seiten 151-158, XP055378793, GB ISSN: 0142-3312, DOI: 10.1177/014233128500700307**

**Beschreibung**

Die Erfindung betrifft ein Verfahren zum Betreiben eines Coriolis-Massedurchflussmessgeräts mit mindestens einem Messrohr und mindestens einem Sensor, der zur Messung einer physikalischen Größe ausgebildet ist, wobei der Sensor ein von der Temperatur des Sensors abhängiges elektrisches Sensorsignal ausgibt, der Sensor durch eine Verbindung mit dem übrigen Coriolis-Massedurchflussmessgerät mechanisch gekoppelt ist und die Verbindung einen thermischen Widerstand aufweist.

Weiterhin betrifft die Erfindung ein Coriolis-Massedurchflussmessgerät mit mindestens einem Messrohr, mindestens einem Sensor, der zur Messung einer physikalischen Größe ausgebildet ist, und einer Auswerteeinheit, wobei der Sensor ein von der Temperatur des Sensors abhängiges elektrisches Sensorsignal ausgibt, der Sensor durch eine Verbindung mit dem übrigen Coriolis-Massedurchflussmessgerät mechanisch gekoppelt ist und die Verbindung einen thermischen Widerstand aufweist.

Das Funktionsprinzip des Coriolis-Massedurchflussmessgeräts ist, dass das von einem Medium durchströmte Messrohr zu einer Schwingung angeregt wird, wobei die Schwingungsrichtung des Messrohrs und damit auch des im Messrohr strömenden Mediums zumindest eine zur Strömungsrichtung des Mediums im Messrohr orthogonale Komponente aufweist. Die orthogonale Komponente der Schwingung des im Messrohr strömenden Mediums ruft in dem strömenden Medium eine Coriolisträgheitskraft hervor, die der orthogonalen Komponente der Schwingung entgegen wirkt. Die Coriolisträgheitskraft verursacht, dass zwischen der Schwingung des Messrohrs an jeweils zwei verschiedenen Messrohrstellen entlang der Längsachse des Messrohrs eine Phasendifferenz auftritt, die proportional zum Massestrom des Mediums durch das Messrohr ist. Das Coriolis-Massedurchflussmessgerät misst die Phasendifferenz und bestimmt aus dieser den Massestrom des Mediums.

Aus der Praxis sind gattungsgemäße Coriolis-Massedurchflussmessgeräte bekannt, bei denen sich die Verbindungen derart verändert haben, dass die Messungen der Sensoren mit Fehlern behaftet sind. Die Veränderungen der Verbindungen können verschiedene Ursachen haben wie zum Beispiel Alterung oder Ermüdung der Verbindungen oder äußere Einflüsse auf die Verbindungen.

Die DE 10 2011 080415 A1 zeigt beispielsweise ein Verfahren zum Detektieren einer Belagsbildung oder einer Abrasion an einem Messrohr, bei dem mit Temperatursensoren eine Temperaturänderung bzw. ein Temperaturverlauf eines Mediums aufgenommen wird. Die Detektion kann dabei durch aktives Aufheizen oder Abkühlen des Mediums realisiert werden. Mindestens ein Temperatursensor ist dabei an das Messrohr gekoppelt, um eine Detektion zu ermöglichen. Diese Verbindung ermüdet mit der Zeit.

Aufgabe der vorliegenden Erfindung ist deshalb, ein Verfahren zum Betreiben eines Coriolis-Massedurchflussmessgeräts sowie ein Coriolis-Massedurchflussmessgerät anzugeben, dass das Erkennen einer Veränderung der Verbindung ermöglicht.

Gemäß einer ersten Lehre bezieht sich die Erfindung auf ein Verfahren, bei dem die zuvor hergeleitete und aufgezeigte Aufgabe gelöst ist. Das erfindungsgemäße Verfahren ist zunächst und im Wesentlichen dadurch gekennzeichnet, dass ein elektrisches Anregungssignal erzeugt wird, das Anregungssignal in den Sensor eingeprägt wird, das von dem Anregungssignal beeinflusste Sensorsignal erfasst wird, eine Veränderung zwischen dem erfassten Sensorsignal und einem Referenzsignal bestimmt wird und die Veränderung zwischen dem erfassten Sensorsignal und dem Referenzsignal einer Veränderung des thermischen Widerstands zugeordnet wird.

Der Sensor ist zur Messung einer physikalischen Größe ausgebildet und gibt das den Wert der physikalischen Größe repräsentierende von der Temperatur des Sensors abhängige elektrische Sensorsignal aus. Der Sensor und das übrige Coriolis-Massedurchflussmessgerät sind durch die Verbindung thermisch gekoppelt, wobei die thermische Kopplung durch den thermischen Widerstand beschrieben wird. Die thermische Kopplung bewirkt, dass Wärme zwischen dem Sensor und dem übrigen Coriolis-Massedurchflussmessgerät ausgetauscht wird, wenn die Temperatur des Sensors und die Temperatur des übrigen Coriolis-Massedurchflussmessgeräts verschieden sind. Die ausgetauschte Wärme beeinflusst die Temperatur des Sensors und damit auch das ausgegebene Sensorsignal. Zwar wird auch Wärme zwischen dem Sensor und der Umgebungsatmosphäre ausgetauscht, jedoch ist dieser Austausch von Wärme im Vergleich zu dem Austausch von Wärme zwischen dem Sensor und dem übrigen Coriolis-Massedurchflussmessgerät für gewöhnlich vernachlässigbar. Die Beeinflussung der Temperatur des übrigen Coriolis-Massedurchflussmessgeräts durch die ausgetauschte Wärme ist für gewöhnlich ebenfalls vernachlässigbar.

Ein bekannter thermischer Widerstand der Verbindung kann bei der Auswertung des Sensorsignals berücksichtig werden, so dass die Messungen des Sensors nicht durch den bekannten thermischen Widerstand mit Fehlern behaftet sind. Die Veränderung des thermischen Widerstands bewirkt jedoch, dass der thermische Widerstand unbekannt ist, wodurch die Messungen des Sensors mit Fehlern behaftet sind. Demnach charakterisiert der thermische Widerstand die Verbindung. Die Veränderung des thermischen Widerstands bedeutet folglich eine Veränderung der Verbindung, die durch das erfindungsgemäße Verfahren erkannt wird. Vorzugsweise wird die Veränderung der Verbindung signalisiert, insbesondere dann, wenn die Veränderung einen vorgegebenen Schwellwert überschreitet.

Das in den Sensor eingeprägte elektrische Anregungssignal bewirkt eine Veränderung der Temperatur des Sensors. Die veränderte Temperatur des Sensors verursacht einen Austausch von Wärme zwischen dem Sensor und dem übrigen Coriolis-Massedurchflussmessgerät, dessen zeitlicher Verlauf den thermischen Widerstand charakterisiert. Folglich ist der zeitliche Verlauf des erfassten Sensorsignals aufgrund der Abhängigkeit des Sensorsignals von der Temperatur des Sensors auch charakteristisch für den thermischen Widerstand. Demnach bewirkt eine Veränderung des thermischen Widerstands eine Veränderung des erfassten Sensorsignals.

Das Anregungssignal wird dermaßen erzeugt, dass die Temperatur des Sensors soweit verändert wird, dass die Beeinflussung des Anregungssignals auf das Sensorsignal erfassbar ist. Die Einprägung des Anregungssignals in den Sensor erfolgt alternativ oder zusätzlich zur Versorgung des Sensors mit elektrischer Energie, die der Sensor zur Messung der physikalischen Größe benötigt, für die er ausgebildet ist.

Die Veränderung zwischen dem erfassten Sensorsignal und dem Referenzsignal kann unterschiedlicher Art sein. In einem Beispiel sind das erfasste Sensorsignal und das Referenzsignal bei unveränderter thermischer Kopplung gleich und weichen bei veränderter thermischer Kopplung voneinander ab. In einem anderen Beispiel weichen das erfasste Sensorsignal und das Referenzsignal schon bei unveränderter thermischer Kopplung voneinander ab und die Abweichung verändert sich bei veränderter thermischer Kopplung.

Der für den thermischen Widerstand der Verbindung charakteristische zeitliche Verlauf des erfassten Sensorsignals spiegelt sich in der Zeitkonstanten des erfassten Sensorsignals wider. Deshalb ist in einer Ausgestaltung des erfindungsgemäßen Verfahrens vorgesehen, dass die Veränderung zwischen dem erfassten Sensorsignal und dem Referenzsignal bestimmt wird, indem die Zeitkonstante des erfassten Sensorsignals und die Veränderung zwischen der Zeitkonstanten des erfassten Sensorsignals und der Zeitkonstanten des Referenzsignals bestimmt wird.

Es ist erkannt worden, dass die thermische Kopplung durch die Verbindung mit der Zeit zumeist abnimmt und in Folge dessen der thermische Widerstand steigt und die Zeitkonstante abnimmt. Deshalb ist in einer Weiterbildung der vorangehenden Ausgestaltung vorgesehen, dass eine Abnahme der Zeitkonstanten des erfassten Sensorsignals im Vergleich zur Zeitkonstanten des Referenzsignals einer Zunahme des thermischen Widerstands der Verbindung zugeordnet wird.

Weiter ist erkannt worden, dass eine Veränderung der thermischen Kopplung mit einer Veränderung der mechanischen Kopplung durch die Verbindung einhergeht. Und zwar nimmt auch die mechanische Kopplung ab, wenn die thermischen Kopplung abnimmt und umgekehrt. Daher ist ein einer weiteren Ausgestaltung des Verfahrens vorgesehen, dass die Veränderung zwischen dem erfassten Sensorsignal und dem Referenzsignal einer Veränderung der mechanischen Kopplung durch die Verbindung zugeordnet wird.

In einer Weiterbildung der vorangehenden Ausgestaltung ist vorgesehen, dass eine Abnahme der Zeitkonstanten des erfassten Sensorsignals im Vergleich zur Zeitkonstanten des Referenzsignals einer Abnahme der mechanischen Kopplung durch die Verbindung zugeordnet wird. Die Weiterbildung setzt voraus, dass die Veränderung zwischen dem erfassten Sensorsignal und dem Referenzsignal bestimmt wird, indem die Zeitkonstante des erfassten Sensorsignals und die Veränderung zwischen der Zeitkonstanten des erfassten Sensorsignals und der Zeitkonstanten des Referenzsignals bestimmt wird.

Eine besonders vorteilhafte Beeinflussung des erfassten Sensorsignals durch das Anregungssignal ist gegeben, wenn das Anregungssignal den zeitlichen Verlauf einer Sprungfunktion aufweist. Der Sprung des Anregungssignals bewirkt eine Störung der thermischen Gleichgewichtslage zwischen dem Sensor und dem übrigen Coriolis-Massedurchflussmessgerät und die Konstanz des Anregungssignals zeitlich vor und nach dem Sprung vereinfacht die Bestimmung der Veränderung des erfassten Sensorsignals in Bezug auf das Referenzsignal, da nach dem Sprung keine weitere sich verändernde Beeinflussung des Sensorsignal durch das Anregungssignal erfolgt. Folglich sieht eine weitere Ausgestaltung vor, dass das Anregungssignal im zeitlichen Verlauf mit einem Sprung von einem ersten Anregungssignalwert zu einem zweiten Anregungssignalwert und konstanten Anregungssignalwerten zeitlich vor und nach dem Sprung erzeugt wird.

In einer Weiterbildung der vorangehenden Ausgestaltung ist vorgesehen, dass das Anregungssignal derart erzeugt wird, dass der erste Anregungssignalwert größer als der zweite Anregungssignalwert ist. Bei dieser Ausgestaltung ist die durch das Anregungssignal im Sensor erzeugte Verlustleistung vor dem Sprung größer als nach dem Sprung des Anregungssignals, wobei die Verlustleistung im Sensor in Wärme umgewandelt wird. Demzufolge kühlt der Sensor nach dem Sprung des Anregungssignals durch den Abfluss von Wärme vom Sensor über die Verbindung zum übrigen Coriolis-Massedurchflussmessgerät ab.

Das elektrische Sensorsignal des Sensors wird über zwei Sensoranschlüsse ausgegeben. Vorzugsweise wird der Sensor über die zwei Sensoranschlüsse auch mit der elektrischen Energie versorgt, die der Sensor zur Messung der physikalischen Größe benötigt, für die er ausgebildet ist. Das in die zwei Sensoranschlüsse eingeprägte Anregungssignal kann eine der beiden elektrischen Größen Strom und Spannung sein. Wenn das Anregungssignal ein Strom ist, wird dieser in einen der zwei Sensoranschlüsse eingeprägt und das erfasste Sensorsignal ist die Spannung zwischen den zwei Sensoranschlüssen, wobei die Spannung die Beeinflussung des Sensors durch das Anregungssignal repräsentiert. Wenn das Anregungssignal eine Spannung ist, wird diese zwischen den zwei Sensoranschlüssen eingeprägt und das erfasste Sensorsignal ist der Strom durch einen der zwei Sensoranschlüsse, wobei der Strom die Beeinflussung des Sensors durch das Anregungssignal repräsentiert. Demnach ist die nichteingeprägte elektrische Größe das Sensorsignal. Da die Realisierung eines Stroms als Anregungssignal für den Sensor und Messung einer Spannung als Sensorsignal technisch vorteilhafter ist als die Realisierung einer Spannung als Anregungssignal für den Sensor und Messung eines Stroms als Sensorsignal, ist in einer weiteren Ausgestaltung vorgesehen, dass das Anregungssignal als Strom in den Sensor eingeprägt wird.

Für die Gewinnung des Referenzsignals gibt es verschiedene Alternativen. Eine erste Alternative sieht vor, dass ein erfasstes Sensorsignal als Referenzsignal verwendet wird. Bei dem erfassten Sensorsignal wird sichergestellt, dass die Verbindung im unveränderten, also im ordnungsgemäßen, Zustand ist. Veränderungen zwischen dem danach erfassten Sensorsignal und dem Referenzsignal bedeuten dann eine Abweichung der Verbindung vom unveränderten Zustand. Eine zweite Alternative setzt zunächst voraus, dass das Coriolis-Massedurchflussmessgerät einen weiteren Sensor aufweist, der weitere Sensor ein von der Temperatur des weiteren Sensors abhängiges weiteres elektrisches Sensorsignal ausgibt, der weitere Sensor durch eine weitere Verbindung mit dem übrigen Coriolis-Massedurchflussmessgerät mechanisch gekoppelt ist und die weitere Verbindung einen weiteren thermischen Widerstand aufweist. Die zweite Alternative ist dann dadurch gekennzeichnet, dass ein weiteres elektrisches Anregungssignal erzeugt wird, das weitere Anregungssignal in den weiteren Sensor eingeprägt wird, das von dem weiteren Anregungssignal beeinflusste weitere Sensorsignal erfasst wird und das erfasste weitere Sensorsignal als das Referenzsignal verwendet wird. Eine Variante der zweiten Alternative sieht vor, dass das der weitre Sensor von dem Sensor verschieden ist. Eine alternative oder zusätzliche Variante sieht vor, dass das weitere Anregungssignal dem Anregungssignal entspricht. Die zweite Alternative kann weitergebildet werden, indem ein Verfahren gemäß einem der Ansprüche 6 bis 8 in Bezug auf den weiteren Sensor ausgeführt wird.

Gemäß einer zweiten Lehre bezieht sich die Erfindung auf ein Coriolis-Massedurchflussmessgerät, bei dem die zuvor hergeleitete und aufgezeigte Aufgabe gelöst ist. Das erfindungsgemäße Coriolis-Massedurchflussmessgerät ist zunächst und im Wesentlichen dadurch gekennzeichnet, dass die Auswerteeinheit ausgebildet ist zur Erzeugung eines elektrischen Anregungssignals, Einprägung des Anregungssignals in den Sensor, Erfassung des von dem Anregungssignal beeinflussten Sensorsignals, Bestimmung einer Veränderung zwischen dem erfassten Sensorsignal und einem Referenzsignal und Zuordnung der Veränderung zwischen dem erfassten Sensorsignal und dem Referenzsignal zu einer Veränderung des thermischen Widerstands, und dass das in den Sensor eingeprägte elektrische Anregungssignaleine Veränderung der Temperatur des Sensors bewirkt, die veränderte Temperatur des Sensors einen Austausch von Wärme zwischen dem Sensor und dem übrigen Coriolis-Massedurchflussmessgerät verursacht, wobei dessen zeitlicher verlauf den thermischen Widerstand charakterisiert..

Die Ausführungen zu dem erfindungsgemäßen Verfahren gelten entsprechend für das erfindungsgemäße Coriolis-Massedurchflussmessgerät und umgekehrt.

Eine Ausgestaltung des erfindungsgemäßen Coriolis-Massedurchflussmessgeräts sieht vor, dass das Coriolis-Massedurchflussmessgerät zur Ausführung eines Verfahrens gemäß einer der vorangehenden Ausgestaltungen, Weiterbildungen, Alternativen und Varianten ausgebildet ist.

Eine weitere Ausgestaltung des erfindungsgemäßen Coriolis-Massedurchflussmessgeräts sieht vor, dass der Sensor ein resistiver Temperatursensor, insbesondere ein Thermistor, oder ein Dehnungssensor, insbesondere ein Dehnungsmessstreifen, ist. Wenn der Sensor ein Temperatursensor ist, ist der Sensor zur Messung der physikalischen Größe Temperatur ausgebildet und gibt das den Wert der Temperatur repräsentierende von der Temperatur des Sensors abhängige Sensorsignal aus. Wenn der Sensor ein Dehnungssensor ist, ist der Sensor zur Messung der physikalischen Größe Dehnung ausgebildet und gibt das den Wert der Dehnung repräsentierende von der Temperatur des Sensors abhängige Sensorsignal aus.

Oftmals weisen gattungsgemäße Coriolis-Massedurchflussmessgeräte sowohl mindestens einen Temperatursensor als auch mindestens einen Dehnungssensor auf. Dann bietet es sich an, den Dehnungssensor gemäß den vorangehenden Ausgestaltungen des erfindungsgemäßen Verfahrens als weiteren Sensor zur Erzeugung des Referenzsignals und das erzeugte Referenzsignal im Zusammenhang mit dem Temperatursensor zu verwenden.

Eine weitere Ausgestaltung des Coriolis-Massedurchflussmessgeräts sieht vor, dass der Sensor durch die Verbindung auf dem Messrohr angeordnet ist. In einer ersten Alternative dazu ist vorgesehen, dass das Messrohr mit einem Träger vorzugsweise unmittelbar verbunden ist und der Sensor auf dem Träger angeordnet ist. In einer zweiten Alternative ist vorgesehen, dass das Messrohr mit einem Träger vorzugsweise unmittelbar verbunden ist und dass mindestens zwei Sensoren auf dem durch das Messrohr und den Träger gebildeten Körper angeordnet sind.

Eine weitere Ausgestaltung sieht vor, dass die Verbindung durch Stoffschluss hergestellt ist, insbesondere durch Kleben. Eine Alternative dazu sieht vor, dass die Verbindung durch Kraftschluss hergestellt ist, insbesondere durch Verschrauben. Der Vorteil der Verbindung durch Stoffschluss gegenüber der Verbindung durch Kraftschluss ist, dass die Verbindung flächig und nicht punktuell ist. Denn die flächige Verbindung bewirkt einen geringeren thermischen Widerstand. Der Vorteil der Verbindung durch Kraftschluss ist die Demontierbarkeit des Sensors.

Im Einzelnen ist eine Vielzahl von Möglichkeiten, das erfindungsgemäße Verfahren und das erfindungsgemäße Coriolis-Massedurchflussmessgerät auszugestalten und weiterzubilden, gegeben. Dazu wird verwiesen sowohl auf die den Patentansprüchen 1 und 11 nachgeordneten Patentansprüche als auch auf die nachfolgende Beschreibung eines bevorzugten Ausführungsbeispiels in Verbindung mit der Zeichnung. In der Zeichnung zeigt

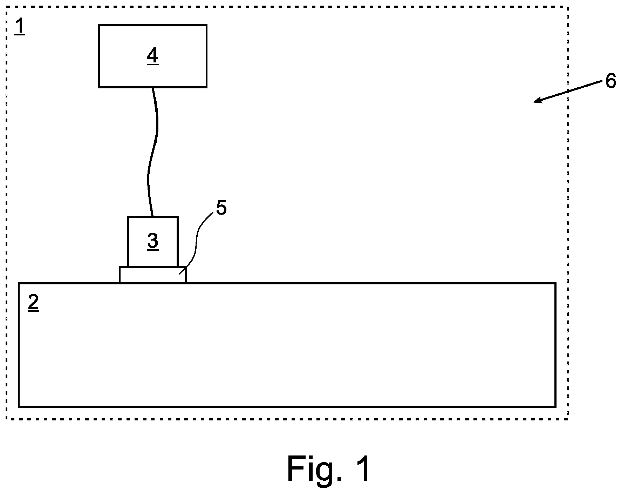

Fig. 1    das Ausführungsbeispiel des erfindungsgemäßen Coriolis-Massedurchflussmessgeräts.

Das in Fig. 1 schematisch dargestellte erfindungsgemäße Coriolis-Massedurchflussmessgerät 1 weist ein Messrohr 2, einen Sensor 3 und eine Auswerteeinheit 4 auf.

Der Sensor 3 ist ein Temperatursensor und gibt ein von der Temperatur $\theta_S$ des Sensors 3 abhängiges elektrisches Sensorsignal aus. Er ist durch eine Verbindung 5 mit dem übrigen Coriolis-Massedurchflussmessgerät 1 mechanisch gekoppelt, wobei die Temperatur des übrigen Coriolis-Massedurchflussmessgerät 1 $\theta_U$ ist. Die Verbindung 5 ist durch einen thermischen Widerstand $R_{SU}$ charakterisiert.

Die Auswerteeinheit 4 erzeugt ein Anregungssignal mit den folgenden Merkmalen. Im zeitlichen Verlauf ist ein Sprung von einem ersten Anregungswert zu einem zweiten Anregungswert. Der erste Anregungswert ist dabei größer als der zweite Anregungswert. Die Anregungswerte sind zeitlich vor und nach dem Sprung konstant. Das Anregungssignal ist demnach eine Sprungfunktion. Da der erste Anregungswert größer als der zweite Anregungswert ist, kühlt der Sensor 3 nach dem Sprung ab.

Die Auswerteeinheit 4 prägt das Anregungssignal als Strom in den Sensor 3 ein. Das Anregungssignal erhöht die Temperatur $\theta_S$ des Sensors 3 bis zum Zeitpunkt des Sprungs des Anregungssignals, wobei die Temperatur $\theta_S$ des Sensors 3 im Zeitpunkt des Sprungs $\theta_{S,0}$ beträgt.

Die Auswerteeinheit 4 erfasst das von dem Anregungssignal beeinflusste Sensorsignal mindestens zu zwei unterschiedlichen Zeitpunkten $t_1$ und $t_2$ nach dem Sprung und bestimmt aus dem erfassten Sensorsignal die Temperatur $\theta_S(t_1)$ und $\theta_S(t_2)$ des Sensors 3 zu diesen Zeitpunkten. Dann bildet die Auswerteeinheit 4 die Differenztemperatur $\theta_D(t_1)$ = $\theta_S(t_1)$ - $\theta_U$ und $\theta_D(t_2)$ = $\theta_S(t_2)$ - $\theta_U$ zwischen dem Sensor 3 und dem übrigen Coriolis-Massedurchflussmessgerät 1.

Der Bestimmung einer Veränderung zwischen dem erfassten Sensorsignal und einem Referenzsignal liegt die Energiebilanz für das Abkühlen des Sensors 3 zugrunde, aus der eine Differentialgleichung abgeleitet wird:

$$\frac{dW_S}{dt} = -\frac{\theta_S - \theta_U}{R_{SU}}, \text{mit}: C_S = \frac{dW_S}{d\theta_S}$$

$$\Rightarrow C_S \frac{d\theta_S}{dt} + \frac{\theta_S}{R_{SU}} = \frac{\theta_U}{R_{SU}}, \text{mit}: \tau = C_S R_{SU}$$

$$\Rightarrow \frac{d\theta_S}{dt} + \frac{1}{\tau}\theta_S = \frac{1}{\tau}\theta_U$$

$$\Leftrightarrow \frac{d(\theta_S - \theta_U)}{dt} + \frac{1}{\tau}(\theta_S - \theta_U) = 0, \text{da}: \frac{d\theta_U}{dt} = 0, \text{mit}: \theta_D = \theta_S - \theta_U$$

$$\Rightarrow \frac{d\theta_D}{dt} + \frac{1}{\tau}\theta_D = 0$$

In den Gleichungen ist in der Reihenfolge ihres ersten Auftretens Ws die Wärmeenergie des Sensors 3, $t$ die Zeit, Cs die Wärmekapazität des Sensors 3 und $\tau$ die Zeitkonstante des Sensors 3. Der Energiebilanz liegt die Erkenntnis zugrunde, dass der Austausch von Wärme zwischen dem Sensor 3 und einer Umgebungsatmosphäre 6 im Vergleich mit dem Austausch von Wärme zwischen dem Sensor 3 und dem übrigen Coriolis-Massedurchflussmessgerät 1 vernachlässigbar und die Temperatur $\theta_U$ des übrigen Coriolis-Massedurchflussmessgerät 1 konstant ist.

Als Lösung der Differentialgleichung wird gefunden:

$$\theta_D = \theta_{D,0} e^{-\frac{t}{\tau}}, \text{mit}: \theta_{D,0} = \theta_{S,0} - \theta_U$$

In der Lösung der Differentialgleichung ist $\theta_{D,0}$ die Differenztemperatur zum Zeitpunkt des Sprungs des Anregungssignals. Nach dem Sprung nähert sich demnach die Temperatur $\theta_S$ des Sensors 3 mit der Zeit wieder der Temperatur $\theta_U$ des übrigen Coriolis-Massedurchflussmessgeräts 1 an. Dabei ist erkannt worden, dass die Erhöhung der Temperatur $\theta_S$ des Sensors 3 durch die Versorgung des Sensors 3 mit elektrischer Energie, die der Sensor 3 zur Messung der physikalischen Größe benötigt, für die er ausgebildet ist, vernachlässigbar ist.

Die Bestimmung der Veränderung zwischen dem erfassten Sensorsignal und dem Referenzsignal erfolgt, indem die Auswerteeinheit 4 zunächst die Zeitkonstante des erfassten Sensorsignals und dann die Veränderung zwischen der Zeitkonstanten des erfassten Signals und der Zeitkonstanten des Referenzsignals bestimmt.

Dabei bestimmt die Auswerteeinheit 4 die Zeitkonstante des Sensorsignals wie folgt:

$$\theta_D(t_1) = \theta_{D,0} e^{-\frac{t_1}{\tau}}, \theta_D(t_2) = \theta_{D,0} e^{-\frac{t_2}{\tau}}$$

$$\Rightarrow \frac{\theta_D(t_2)}{\theta_D(t_1)} = \frac{e^{-\frac{t_2}{\tau}}}{e^{-\frac{t_1}{\tau}}} = e^{-(t_2-t_1)}$$

$$\Leftrightarrow \tau = \frac{t_1 - t_2}{\ln\left(\frac{\theta_D(t_2)}{\theta_D(t_1)}\right)}$$

Die Auswerteeinheit 4 ordnet die Veränderung zwischen der Zeitkonstanten des erfassten Sensorsignals und der Zeitkonstanten des Referenzsignals dem thermischen Widerstand $R_{SU}$ zu und gibt ein Signal aus, wenn die Veränderung einen Schwellwert überschreitet.

Bezugszeichen:

1    Coriolis-Massedurchflussmessgerät

2    Messrohr

3    Sensor

4    Auswerteeinheit

5    Verbindung

6    Umgebungsatmosphäre

**Patentansprüche**

**1.** Verfahren zum Betreiben eines Coriolis-Massedurchflussmessgeräts (1) mit mindestens einem Messrohr (2) und mindestens einem Sensor (3), der zur Messung einer physikalischen Größe ausgebildet ist, wobei der Sensor (3) ein von der Temperatur des Sensors (3) abhängiges elektrisches Sensorsignal ausgibt, der Sensor (3) durch eine Verbindung (5) mit dem übrigen Coriolis-Massedurchflussmessgerät (1) mechanisch gekoppelt ist und die Verbindung (5) einen thermischen Widerstand aufweist,
**dadurch gekennzeichnet,**
**dass** ein elektrisches Anregungssignal erzeugt wird, das Anregungssignal in den Sensor (3) eingeprägt wird, das von dem Anregungssignal beeinflusste Sensorsignal erfasst wird, eine Veränderung zwischen dem erfassten Sensorsignal und einem Referenzsignal bestimmt wird und die Veränderung zwischen dem erfassten Sensorsignal und dem Referenzsignal einer Veränderung des thermischen Widerstands zugeordnet wird, und dass das in den Sensor (3) eingeprägte elektrische Anregungssignal eine Veränderung der Temperatur des Sensors (3) bewirkt, die veränderte Temperatur des Sensors (3) einen Austausch von Wärme zwischen dem Sensor (3) und dem übrigen Coriolis-Massedurchflussmessgerät (1) verursacht, wobei dessen zeitlicher Verlauf den thermischen Widerstand charakterisiert.

**2.** Verfahren nach Anspruch 1, **dadurch gekennzeichnet, dass** die Veränderung zwischen dem erfassten Sensorsignal und dem Referenzsignal bestimmt wird, indem die Zeitkonstante des erfassten Sensorsignals und die Veränderung zwischen der Zeitkonstanten des erfassten Sensorsignals und der Zeitkonstanten des Referenzsignals bestimmt wird.

3. Verfahren nach Anspruch 2, **dadurch gekennzeichnet, dass** eine Abnahme der Zeitkonstanten des erfassten Sensorsignals im Vergleich zur Zeitkonstanten des Referenzsignals einer Zunahme des thermischen Widerstands der Verbindung (5) zugeordnet wird.

4. Verfahren nach einem der Ansprüche 1 bis 3, **dadurch gekennzeichnet, dass** die Veränderung zwischen dem erfassten Sensorsignal und dem Referenzsignal einer Veränderung der mechanischen Kopplung durch die Verbindung (5) zugeordnet wird.

5. Verfahren nach Anspruch 2 und 4, **dadurch gekennzeichnet, dass** eine Abnahme der Zeitkonstanten des erfassten Sensorsignals im Vergleich zur Zeitkonstanten des Referenzsignals einer Abnahme der mechanischen Kopplung durch die Verbindung (5) zugeordnet wird.

6. Verfahren nach einem der Ansprüche 1 bis 5, **dadurch gekennzeichnet, dass** das Anregungssignal im zeitlichen Verlauf mit einem Sprung von einem ersten Anregungssignalwert zu einem zweiten Anregungssignalwert und konstanten Anregungssignalwerten zeitlich vor und nach dem Sprung erzeugt wird.

7. Verfahren nach Anspruch 6, **dadurch gekennzeichnet, dass** das Anregungssignal derart erzeugt wird, dass der erste Anregungssignalwert größer als der zweite Anregungssignalwert ist.

8. Verfahren nach einem der Ansprüche 1 bis 7, **dadurch gekennzeichnet, dass** das Anregungssignal als Strom in den Sensor (3) eingeprägt wird.

9. Verfahren nach einem der Ansprüche 1 bis 8, wobei das Coriolis-Massedurchflussmessgerät (1) einen weiteren Sensor aufweist, der weitere Sensor ein von der Temperatur des weiteren Sensors abhängiges weiteres elektrisches Sensorsignal ausgibt, der weitere Sensor durch eine weitere Verbindung mit dem übrigen Coriolis-Massedurchflussmessgerät (1) mechanisch gekoppelt ist und die weitere Verbindung einen weiteren thermischen Widerstand aufweist, **dadurch gekennzeichnet, dass** ein weiteres elektrisches Anregungssignal erzeugt wird, das weitere Anregungssignal in den weiteren Sensor eingeprägt wird, das von dem weiteren Anregungssignal beeinflusste weitere Sensorsignal erfasst wird und das erfasste weitere Sensorsignal als das Referenzsignal verwendet wird.

10. Verfahren nach Anspruch 9, **dadurch gekennzeichnet, dass** ein Verfahren gemäß einem der Ansprüche 6 bis 8 in Bezug auf den weiteren Sensor ausgeführt wird.

11. Coriolis-Massedurchflussmessgerät (1) mit mindestens einem Messrohr (2), mindestens einem Sensor (3), der zur Messung einer physikalischen Größe ausgebildet ist, und einer Auswerteeinheit (4), wobei der Sensor (3) ein von der Temperatur des Sensors (3) abhängiges elektrisches Sensorsignal ausgibt, der Sensor (3) durch eine Verbindung (5) mit dem übrigen Coriolis-Massedurchflussmessgerät (1) mechanisch gekoppelt ist und die Verbindung (5) einen thermischen Widerstand aufweist,
**dadurch gekennzeichnet,**
**dass** die Auswerteeinheit (4) ausgebildet ist zur Erzeugung eines elektrischen Anregungssignals, Einprägung des Anregungssignals in den Sensor (3), Erfassung des von dem Anregungssignal beeinflussten Sensorsignals, Bestimmung einer Veränderung zwischen dem erfassten Sensorsignal und einem Referenzsignal und Zuordnung der Veränderung zwischen dem erfassten Sensorsignal und dem Referenzsignal zu einer Veränderung des thermischen Widerstands, und dass das in den Sensor (3) eingeprägte elektrische Anregungssignal eine Veränderung der Temperatur des Sensors (3) bewirkt, die veränderte Temperatur des Sensors (3) einen Austausch von Wärme zwischen dem Sensor (3) und dem übrigen Coriolis-Massedurchflussmessgerät (1) verursacht, wobei dessen zeitlicher Verlauf den thermischen Widerstand charakterisiert.

12. Coriolis-Massedurchflussmessgerät (1) nach Anspruch 11, **dadurch gekennzeichnet, dass** das Coriolis-Massedurchflussmessgerät (1) zur Ausführung eines Verfahrens gemäß einem der Ansprüche 2 bis 10 ausgebildet ist.

13. Coriolis-Massedurchflussmessgerät (1) nach Anspruch 11 oder 12, **dadurch gekennzeichnet, dass** der Sensor (3) ein resistiver Temperatursensor, insbesondere ein Thermistor, oder ein Dehnungssensor, insbesondere ein Dehnungsmessstreifen, ist.

**14.** Coriolis-Massedurchflussmessgerät (1) nach einem der Ansprüche 11 bis 13, **dadurch gekennzeichnet, dass** der Sensor (3) durch die Verbindung (5) auf dem Messrohr (2) angeordnet ist.

**15.** Coriolis-Massedurchflussmessgerät (1) nach einem der Ansprüche 11 bis 14, **dadurch gekennzeichnet, dass** die Verbindung (5) durch Stoffschluss hergestellt ist, insbesondere durch Kleben.

**Claims**

**1.** Method for operating a Coriolis mass flowmeter (1) having at least one measuring tube (2) and at least one sensor (3), wherein the sensor (3) emits an electric sensor signal depending on the temperature of the sensor (3), the sensor (3) is mechanically coupled to the rest of the Coriolis mass flowmeter (1) via a connection (5) and the connection (5) has a thermal resistance,
**characterized in**
**that** an electric excitation signal is generated, the excitation signal is impressed in the sensor (3), the sensor signal influenced by the excitation signal is detected, a change between the detected sensor signal and a reference signal is determined and the change between the detected sensor signal and the reference signal is associated with a change in the thermal resistance, and that the electric excitation signal impressed in the sensor (3) causes a change in the temperature of the sensor (3), the changed temperature of the sensor (3) causes an exchange of heat between the sensor (3) and the rest of the Coriolis mass flowmeter (1), wherein the temporal course of the exchange characterizes the thermal resistance.

**2.** Method according to claim 1, **characterized in that** the change between the detected sensor signal and the reference signal is determined **in that** the time constant of the detected sensor signal and the change between the time constants of the detected sensor signal and the time constant of the reference signal are determined.

**3.** Method according to claim 2, **characterized in that** a decrease of the time constant of the detected signal compared to the time constant of the reference signal is associated with a increase of the thermal resistance of the connection (5).

**4.** Method according to any one of claims 1 to 3, **characterized in that** the change between the detected sensor signal and the reference signal is associated with a change of the mechanical coupling via the connection (5).

**5.** Method according to claim 2 and 4, **characterized in that** a decrease of the time constant of the detected sensor signal compared to the time constant of the reference signal is associated with a decrease of the mechanical coupling via the connection (5).

**6.** Method according to any one of claims 1 to 5, **characterized in that** the excitation signal is generated in a temporal course with a step from a first excitation signal value to a second excitation signal value and constant excitation signal values are generated temporally before and after the step.

**7.** Method according to claim 6, **characterized in that** the excitation signal is generated so that the first excitation signal value is greater than the second excitation signal value.

**8.** Method according to any one of claims 1 to 7, **characterized in that** the excitation signal is impressed in the sensor (3) in the form of electric current.

**9.** Method according to any one of claims 1 to 8, wherein the Coriolis mass flowmeter (1) has a further sensor, the further sensor emits a further electric sensor signal depending on the temperature of the further sensor, the further sensor is mechanically coupled to the rest of the Coriolis mass flowmeter (1) via a further connection, and the further connection has a further thermal resistance, **characterized in that** a further electric excitation signal is generated, the further excitation signal is impressed in the further sensor, the further sensor signal influenced by the further excitation signal is detected and the detected further sensor signal is used as reference signal.

**10.** Method according to claim 9, **characterized in that** a method according to any one of claims 6 to 8 is carried out in respect to the further sensor.

**11.** Coriolis mass flowmeter (1) having at least one measuring tube (2), at least one sensor (3) and an evaluation unit (4), wherein the sensor (3) emits an electric sensor signal depending on the temperature of the sensor (3), the sensor (3) is mechanically coupled to the rest of the Coriolis mass flowmeter (1) via a connection (5), and the connection (5) has a thermal resistance,

**characterized in**

**that** the evaluation unit (4) is designed for generating an electric excitation signal, impressing the excitation signal in the sensor (3), detecting the sensor signal influenced by the excitation signal, determining a change between the detected sensor signal and the reference signal and associating the change between the detected sensor signal and the reference signal with a change of the thermal resistance and that the electric excitation signal impressed in the sensor (3) causes a change in the temperature of the sensor (3), the changed temperature of the sensor (3) causes an exchange of heat between the sensor (3) and the rest of the Coriolis mass flowmeter (1), wherein the temporal course of the exchange characterizes the thermal resistance.

12. Coriolis mass flowmeter (1) according to claim 11, **characterized in that** the Coriolis mass flowmeter (1) is designed for carrying out a method according to any one of claims 2 to 10.

13. Coriolis mass flowmeter (1) according to claim 11 or 12, **characterized in that** the sensor (3) is a resistive temperature sensor, in particular a thermistor, or a strain sensor, in particular a strain gauge.

14. Coriolis mass flowmeter (1) according to any one of claims 11 to 13, **characterized in that** the sensor (3) is arranged on the measuring tube (2) via the connection (5).

15. Coriolis mass flowmeter (1) according to any one of claims 11 to 14, **characterized in that** the connection (5) is made using an adhesive bond, in particular by gluing.

**Revendications**

1. Procédé de fonctionnement d'un débitmètre massique à effet Coriolis (1) comprenant au moins un tube de mesure (2) et au moins un capteur (3) qui est conçu pour mesurer une grandeur physique, dans lequel le capteur (3) délivre un signal de capteur électrique dépendant de la température du capteur (3), le capteur (3) est couplé mécaniquement par l'intermédiaire d'une liaison (5) au reste du débitmètre massique à effet Coriolis (1) et la liaison (5) présente une résistance thermique,

   **caractérisé en ce qu'**un signal d'excitation électrique est généré, le signal d'excitation est appliqué au capteur (3), le signal de capteur influencé par le signal d'excitation est détecté, une variation entre le signal de capteur détecté et un signal de référence est déterminée et la variation entre le signal de capteur détecté et le signal de référence est associée à une variation de la résistance thermique, et **en ce que** le signal d'excitation électrique appliqué au capteur (3) provoque une modification de la température du capteur (3), la température modifiée du capteur (3) entraîne entre le capteur (3) et le reste du débitmètre massique à effet Coriolis (1) un échange de chaleur dont l'évolution temporelle caractérise la résistance thermique.

2. Procédé selon la revendication 1, **caractérisé en ce que** la variation entre le signal de capteur détecté et le signal de référence est déterminée en déterminant la constante de temps du signal de capteur détecté et la variation entre la constante de temps du signal de capteur détecté et la constante de temps du signal de référence.

3. Procédé selon la revendication 2, **caractérisé en ce qu'**une diminution de la constante de temps du signal de capteur détecté par comparaison à la constante de temps du signal de référence est associée à une augmentation de la résistance thermique de la liaison (5) .

4. Procédé selon l'une des revendications 1 à 3, **caractérisé en ce que** la variation entre le signal de capteur détecté et le signal de référence est associée à une variation du couplage mécanique par l'intermédiaire de la liaison (5).

5. Procédé selon les revendications 2 et 4, **caractérisé en ce qu'**une diminution de la constante de temps du signal de capteur détecté par comparaison à la constante de temps du signal de référence est associée à une diminution du couplage mécanique par l'intermédiaire de la liaison (5).

6. Procédé selon l'une des revendications 1 à 5, **caractérisé en ce que** le signal d'excitation est généré selon une évolution temporelle présentant un saut d'une première valeur de signal d'excitation à une seconde valeur de signal d'excitation et **en ce que** des valeurs de signal d'excitation constantes sont générées dans le temps avant et après le saut.

**7.** Procédé selon la revendication 6, **caractérisé en ce que** le signal d'excitation est généré de telle manière que la première valeur du signal d'excitation soit supérieure à la seconde valeur du signal d'excitation.

**8.** Procédé selon l'une des revendications 1 à 7, **caractérisé en ce que** le signal d'excitation est appliqué au capteur (3) sous la forme d'un courant.

**9.** Procédé selon l'une des revendications 1 à 8, dans lequel le débitmètre massique à effet Coriolis (1) comporte un autre capteur, l'autre capteur délivre un autre signal de capteur électrique qui dépend de la température de l'autre capteur, l'autre capteur est couplé mécaniquement au reste du débitmètre massique à effet Coriolis (1) par l'intermédiaire d'une autre liaison et l'autre liaison présente une autre résistance thermique, **caractérisé en ce qu'**un autre signal d'excitation électrique est généré, l'autre signal d'excitation est appliqué à l'autre capteur, l'autre signal de capteur influencé par l'autre signal d'excitation est détecté et l'autre signal de capteur détecté est utilisé comme signal de référence.

**10.** Procédé selon la revendication 9, **caractérisé en ce qu'**un procédé selon l'une des revendications 6 à 8 est mis en œuvre en rapport avec l'autre capteur.

**11.** Débitmètre massique à effet Coriolis (1) comprenant au moins un tube de mesure (2), au moins un capteur (3) qui est conçu pour mesurer une variable physique, et une unité d'évaluation (4), dans lequel le capteur (3) délivre un signal de capteur électrique dépendant de la température du capteur (3), le capteur (3) est couplé mécaniquement par l'intermédiaire d'une liaison (5) au reste du débitmètre massique à effet Coriolis (1) et la liaison (5) présente une résistance thermique,
**caractérisé en ce que** l'unité d'évaluation (4) est conçue pour générer un signal d'excitation électrique, appliquer le signal d'excitation au capteur (3), détecter le signal de capteur influencé par le signal d'excitation, déterminer une variation entre le signal de capteur détecté et un signal de référence et associer la variation entre le signal de capteur détecté et le signal de référence à une variation de la résistance thermique, et **en ce que** le signal d'excitation électrique appliqué au capteur (3) provoque une variation de la température du capteur (3), la température modifiée du capteur (3) entraîne entre le capteur (3) et le reste du débitmètre massique à effet Coriolis (1) un échange de chaleur dont l'évolution temporelle caractérise la résistance thermique.

**12.** Débitmètre massique à effet Coriolis (1) selon la revendication 11, **caractérisé en ce que** le débitmètre massique à effet Coriolis (1) est conçu pour mettre en œuvre un procédé selon l'une des revendications 2 à 10.

**13.** Débitmètre massique à effet Coriolis (1) selon la revendication 11 ou 12, **caractérisé en ce que** le capteur (3) est un capteur de température résistif, en particulier une thermistance, ou un capteur de contrainte, en particulier une jauge de contrainte.

**14.** Débitmètre massique à effet Coriolis (1) selon l'une des revendications 11 à 13, **caractérisé en ce que** le capteur (3) est disposé sur le tube de mesure (2) par l'intermédiaire de la liaison (5).

**15.** Débitmètre massique à effet Coriolis (1) selon l'une des revendications 11 à 14, **caractérisé en ce que** la liaison (5) est réalisée par complémentarité de matériau, en particulier par collage.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011080415 A1